# EUROPEAN PATENT APPLICATION

(11) **EP 2 884 809 A1**
(43) Date of publication of application: **17.06.2015**
(21) Application number: 13196504.8
(22) Date of filing: 10.12.2013
(51) Int. Cl.: H04W 72/12, H04W 88/06

(54) **Method of handling multiple wireless networks**

(71) Applicant: Gemalto M2M GmbH, 81541 München (DE)
(72) Inventor: Simon, Carsten, 16761 Hennigsdorf (DE); Wehmeier, Lars, 14612 Falkensee (DE)
(74) Representative: Grevin, Emmanuel

(57) **Abstract**

The present invention relates to a method to operate a wireless communication device, which is configured to be operated in more than one wireless networks, but with only one transceiver and protocol stack. For that the method comprises for each subscription a registration step to the associated wireless networks and storing received synchronization data, including timer information. After one of said timers related to a subscription expires, the method comprises the step of activating the respective subscription and sending an area update message to the wireless network, in order to prevent unregistering for the respective subscription from the associated wireless network.

## Description

### FIELD OF THE INVENTION

The present invention relates to a method to operate a wireless communication device having a transceiver and a protocol stack connectively associated to the transceiver, at least two storage elements each associated to a distinct subscription to wireless networks.

The invention also pertains to a wireless communication device using said method.

### BACKGROUND OF THE INVENTION

Generally, there is an increasing interest in wireless communication devices configured for being operated in at least two distinct wireless networks. Such networks are those according to known wireless technology standards defined by ETSI resp. 3GPP, like 2G or 3G. Both options are possible that the two wireless networks, the wireless communication device is operating in support the same or different wireless technology standards.

Such solutions are useful for the need for a reliable wireless connection, by allowing use of a fallback wireless network, in case one wireless network provides bad coverage. It is another problem to be resolved that different wireless networks provide different capabilities or services. Those services can comprise certain capability like SMS, voice or IP connections, but also more elaborate ones like IMS, E-Call etc.

If in the supported wireless networks for different types of services different fares are assigned, it is preferable to be able to switch between different available wireless networks according to the requested service. This is moreover true if one service is not available at all in one wireless network, and/or if other common services have higher fares in the other wireless networks. Further it is compulsory to allow such switch between the accessible wireless networks without a remarkable delay.

Further alternative and advantageous solutions would, accordingly, be desirable in the art.

It is known in the prior art to provide a device with multiple communication entities, at least multiple radio frequency (RF) units. This setup is preferably dedicated for cellular phones which depend on the capabilities to receive incoming calls or messages.

In the field of machine-to-machine communication (M2M field) typically the use case is narrower. Machine-to-machine communication is those between devices equipped with a machine-to-machine module (M2M-Module), which fulfill all wireless communication tasks for the device. For machine-to-machine communication in particular data-only communication is performed. It is further in many cases limited to mobile originated communication that means only initiated by the wireless communication device, but no acceptance to incoming calls.

On the other hand in the field of machine-to-machine communication it is compulsory to reduce material costs, therefore the mentioned known solutions are not applicable.

It is therefore the problem to find a cost-efficient method for operating a respective wireless communication device within at least two distinct substitutable wireless networks without noticeable delay.

### SUMMARY OF THE INVENTION

The present invention aims at solving addressed problem by a method to operate a wireless communication device according to claim 1.

The present invention also relates to a wireless communication device configured to execute said method according to claim 9.

It is therefore according to a first aspect of the invention proposed a method to operate a the wireless communication device having a transceiver and a protocol stack connectively associated to the transceiver, at least two storage elements each associated to a distinct subscription to wireless networks, the transceiver and the protocol stack being shared by the storage elements, the method comprising the steps of:
- registering with each subscription in the associated wireless network,
- during registration gathering synchronization data relative to area update,
- maintaining a timer defined from the synchronization data for each associated subscription,
- after one of the timers expires executing the steps:
- activating the subscription associated to the expired timer,
- sending area update message to the wireless network associated to the activated subscription in respect to the synchronization data.

According to this method a wireless communication device is equipped to be operated within at least two wireless networks, in particular equipped to support wireless technology standards defined by ETSI, 3GPP. The wireless communication device is in case of machine-to-machine devices composed at least of a M2M module and an application part, whereby the M2M module fulfills all wireless communication parts.

The wireless communication device comprises - preferably within the M2M module - a transceiver and a protocol stack. A transceiver is a unit which is configured to operate both as a transmitter and receiver of radio waves for wireless communication. It is therefore together with an antenna the hardware interface to the wireless network.

The transceiver is connectively associated to the protocol stack. This is a software unit, typically running within a control unit of the wireless communication device, that implements at least one wireless communication protocol according to the supported wireless technology standards. It allows decoding incoming transmission from at least one base station of the wireless network and coding outgoing transmissions to at least one base station.

The wireless communication device further comprises at least two storage elements each associated to a distinct subscription to wireless networks. Those storage elements can be contained in separate physical units, in particular subscriber identity modules (SIMs). Alternatively the at least two storage elements can be contained in just one unit, in particular a universal integrated circuit card (UICC). Regardless of the type of containing unit it is both possible that the containing unit is detachable or undetachable coupled with the wireless communication device.

Each of the storage elements is associated to a subscription, whereby a subscription represents a customer account within a wireless network. Each subscription is materialized at least by an identity stored in the storage element, in particular the IMSI (international mobile subscriber identity). As the subscriptions associated to the at least two storage elements are distinct with respect to the wireless networks, it is preferable that each storage element, respectively the identity stored within the storage element, belong to different wireless networks. It is here in particular meant that the wireless networks are run from different operators, instead of different wireless networks of the same operator, but implementing different wireless technology standards.

The transceiver and the protocol stack are shared by the storage elements. This means that regardless which associated subscription is used for wireless communication it is only the one transceiver and the one protocol stack that is used for it.

The inventive method starts with a registration step to the wireless networks associated to the subscriptions associated to the at least two storage elements. It is to be understood that this method step can be executed for less subscriptions than available storage elements. For the following without limiting the scope, it is assumed that the number of available storage elements and of subscriptions used for the method match.

During the as such commonly known registration process any wireless communication device executes a couple of steps, which can be completely or in parts wireless technology standards specific. Those steps comprise at least:
- a search and synchronization to synchronization channels of the wireless network or in particular one of the base stations within the wireless network,
- a decoding of further wireless network specific information, in particular system information (SI),
- a transmission of subscriber identity information to the wireless network and in response on wireless network side an confirmation if the subscriber is entitled for accessing the wireless network, either by checking its HLR (home location register) or its VLR (visitor location register).

During those registration steps, in particular when receiving wireless network specific information the wireless communication devices gathers synchronization data relative to area update messages. Area update messages are such information regularly provided from the wireless communication device to the wireless network the wireless communication device is registered in.

This gathered information informs at least about the frequency of expected area update messages of the wireless communication device to the wireless network. Further a time anchor is defined in relationship to the gathered information, which indicates at which time the next area update message is expected.

As a result of this gathering for each subscription a timer is maintained in the wireless communication device for area update messages based on the synchronization data relative to area update messages.

The previous steps are executed for all distinct subscriptions. At the end of these registration steps the wireless communication device is registered in at least two distinct wireless networks. One of the subscriptions associated to one of the wireless networks is the active one. It is arbitrary which of the subscriptions is selected, this can be done manually, by a predefined preference, by wireless network quality of service received through wireless network specific information, by other measures or just accidentally.

When operating within the selected wireless network, regardless if in connected or idle mode, it is monitored if one of the maintained timers expires. If so, the following steps are executed.

First, the subscription associated to the expired timer is activated. This in parallel means that the by now active subscription is not active anymore. During the step of activation the protocol stack receives access information regarding the wireless network which is to be activated. Such access information is preferably received during the registration step, from the storage element assigned to the wireless network and/or during further communication with the respective wireless network.

Said access information comprise at least an information which wireless network the next communication attempts are addressed to. This wireless network is preferably identified by a mobile network code (MNC) and/or a public land mobile network code (PLMN-Code). It is further preferred to provide further access information, which is typically dependant from the supported wireless technology standard and/or the way it is operated within the wireless network, in particular in circuit switched domain (CS) or packet switched domain (PS).

After concluding with the activation of the subscription associated to the wireless network now an area update message is sent to the now active wireless network. Such area update message comprises in particular information relative to the current cell the wireless communication device is camped on. Further data, in particular identifying the wireless communication device are typically also included.

Of course each timer is restarted at once after expiry. Therefore the whole process is executed repeatedly, when the timer expires again.

Further the whole described process applies to all timers maintained for the present subscriptions. In case the timer is associated to the currently active subscription at least the activation step can be omitted. If the area update message is sent for the currently active subscription in connected mode, thus during a running communication, is dependant from the wireless technology standard of the wireless network the active subscription is registered in.

The sending of the area update messages facilitates a switching of the active subscriptions. After the registration step is concluded, the wireless network would within a given timeframe invalidate the registration of the corresponding subscription. The timeframe is corresponding to said frequency of expected area update messages. This would mean that in response to the activation step the wireless communication device, in particular the protocol stack and/or the transceiver, could not access the respective wireless network, without repeating the time consuming registration process. The synchronization data - or at least a subset of these - are thus invalid, whereby the wireless communication device does not receive any indication about this situation.

Advantageous is that the inventive method is adaptable to support different wireless technology standards. Each subscription can individually be handled in consideration of the registered wireless network associated to the respective subscription. This means that furthermore a mixture of wireless technology standards can be handled.

The inventive method is further ready to support a high number of subscriptions, only limited by average frequency in comparison to the time needed for the area update message request.

For wireless communication devices out of the M2M field the method is further advantageous as it is in relation to other known methods comparably power-saving. In particular those wireless communication devices equipped with a battery, e.g. a Point-of-Sale (POS) device, can take advantage of this fact. The power-saving is because it is not necessary to regularly decode paging channels for each of the maintained registration. This paging is executed depending on wireless technology standard and wireless network configuration in a frequency from milliseconds to a few seconds basis (for 3G 80 ms - 5,1 sec, for 2G similar). Compared to this the sending of area update messages occurs only every 7 minutes or a multiple of this period.

After the area update message is sent, it is in a preferred embodiment proposed to activate the subscription which was previously used again. With that it is assured that in idle mode the current active subscription can seamlessly be used. Thus when a mobile originated connection request is about to be launched, the originally selected subscription will be used.

To the accomplishment of the foregoing and related ends, one or more embodiments comprise the features hereinafter fully described and particularly pointed out in the claims.

In a further preferred embodiment it is proposed a method wherein the protocol stack is further configured to receive from a protocol stack state interface information relating to the associated subscription, comprising the step of:
- for each subscription, maintaining an associated protocol stack state interface,
- during registration with each subscription obtain information relating to the associated subscription from gathered synchronization data and store with protocol stack state interface,
- during the step of activating the subscription providing the protocol stack with said information relating to the associated subscription from the protocol stack state interface associated to the activated subscription.

According to this method a protocol stack state interface is a means to access a storage area assigned to each subscription which holds a collection of data specific to the wireless network associated to said subscription. Those data are used by the protocol stack for accessing respective wireless network. Part of these data is preferably information relative to the timer associated to the subscription.

Further access information for accessing the wireless network are preferably stored by means of the protocol stack state interface.

Such access information can comprise at least one of:
- wireless technology, in particular GSM, EDGE, GPRS, WCDMA, CDMA, LTE used by accessible wireless network
- Frequency and/or band and/or channel (e.g. for CDMA) for access of wireless network
- PLMN Code, in particular MCC, MNC and/or area code of accessible wireless network, and
- Wireless network and/or cell related system information, necessary to physically access the wireless network e.g. System Information 3 or 4 in GSM or equivalent System Information blocks in UMTS, including cell identity, cell selection parameters and/or location area identification, scrambling code and spreading factors.

The content stored by means of the protocol stack state interface, in particular the access information, is initially gathered during registration step with the respective subscription to the associated wireless network. Further it is updated during active phases of the current subscription by various sorts operations with the wireless network.

The protocol stack state interface can be implemented as an interface for accessing a memory area, or including the memory area itself. The memory area handled by means of the protocol stack state interface can preferably be a volatile memory or a permanent storage memory within the wireless communication device. Preferably it is handled within operation memory of the wireless communication device. It is further preferably accessible by the protocol stack.

As the protocol stack is handling a process state in its operating memory, typically in the data segment of the memory assigned to the process (process memory), the protocol stack state interface can be used to swap its content in the data segment of the process memory. Alternatively all maintained protocol stack state interfaces are in a memory accessible for the protocol stack by operating system specific means. Dependent upon the architecture of the wireless communication device shared memory or memory mapping methods can preferably be used. With that architecture a simple exchange of pointers to the currently activated protocol stack state interface would make the stored information instantly available for the protocol stack.

By means of the protocol stack state interface it is therefore possible to easily and without delay switch between the subscriptions and provide the protocol stack with all relevant information with respect to the currently active subscription.

In a preferred embodiment it is proposed a method further comprising the steps of:
- selecting a first subscription associated to one of the storage elements for being used for a future connection through the protocol stack,
- activating the selected subscription,
- under request or in case of detection of service degradation of the wireless network associated to selected subscription, changing the subscription selection from the first subscription to a second subscription,
- activating said second subscription.

This embodiment allows changing the selection of the predominantly active first subscription. Initially as set out before one of the registered subscriptions is selected as being active. This can be done right after the registration step of all subscriptions or due to a change of selection. The selected first subscription is then activated.

After that, preferably after an amount of time, it might happen that it turns out that a switch of the active first subscription to a second subscription is advantageous. This can have different reasons.

One reason can be a manual request by the user. For this the wireless communication device needs to be equipped with user interface means that accepts an input from the user instructing the wireless communication device to switch. This can in particular be in response to any type of information provided by the wireless communication device through the user interface concerning. Such information can be a connection quality indicator of the currently active wireless network showing that the connection quality has decreased and therefore the next communication attempt might be endangered.

Alternatively this request can be launched due to an envisaged type of service which is planned to be used after the switch. This is in particular true if the currently active and the envisaged second subscription provide different service capabilities or at least fares for the addressed service. This is in particular also applicable for an automatic switch request done by the wireless communication device upon an outside trigger. An example for such an outside trigger can be an emergency situation of a car. Such emergency situation triggers an onboard telematics unit to launch by means of an incorporated M2M module an emergency call to a public-safety answering point (PSAP). In case only one of the available subscriptions is capable of handling emergency calls in the associated wireless network, this subscription is selected and activated. It is obvious that any delay for the switching process has to be avoided in order to launch quickly the emergency call.

Another alternative trigger for switching the selected subscription can be launched by the wireless communication unit, in particular by means of an incorporated M2M module, itself. When the wireless communication unit detects a service degradation of the wireless network associated to the selected first subscription, it can launch a change as well.

There are many measures how to detect such degradation. Typically if the power in the used band of the wireless link is below a predefined threshold and no other cell of the same wireless network is available with better power rates, a service degradation can be ascertained.

If one of such reasons applies the envisaged second subscription is selected, and the activation process is started. Part of this process is, that after activating the second subscription now the timer of the first subscription needs to be monitored for expiry. If this timer expires, which could even happen immediately after activating the second subscription, it is necessary to switch back to the first subscription, launch an area update message, and then switch back to the second subscription.

All future communication is then handled via the second subscription, be it an emergency call or any other type of service, until a switch of selected subscription is requested.

According to a preferred embodiment it is proposed a method wherein the protocol stack is operating by means of the transceiver in an active connection, set up by use of one selected subscription, associated to one of the storage elements and set up with a receiving unit being accessible by means of the corresponding wireless network.

The method further comprises the steps of, after one timer associated to a subscription different from the selected subscription expires:
- suspending active connection to enable the activation of the subscription associated to the expired timer and the sending of the area update message;
- and, after the step of sending area update message, resuming active connection.

According to this embodiment the proposed method copes with the situation that in the active subscription the transceiver is occupied by an active connection with a receiving unit.

The receiving unit can be any other communication device accessible by means of the respective wireless network, in particular another wireless communication device, a landline phone or a server in the internet or within respectively associated to the wireless network.

An active connection can therefore be a phone call, a data connection or any other supported type of service. The term active connection must not be mixed up with an active subscription in the sense used within this document. An active connection means that actually data are sent to or received from a receiving unit by means of a wireless link provided by the respective wireless network.

The addressed situation can primarily occur for connections with a certain duration. Simple sending of a single message like a short message would potentially not require the proposed step, as it can be instantly sent or being delayed until the first selected subscription is active again.

In case the active connection is ongoing in that moment when one of the timers of a subscription different from the selected subscription expires, there is a need for a special solution. This solution has to assure that the registrations to the subscriptions different from the active subscription are maintained.

In order to doing so, the active connection is suspended in response to the expiry of a timer, then the subscription associated to the expired timer is activated and an area update message is sent. After concluding this step the active connection is resumed.

There are a couple of options how to conduct the described method to suspend the active connection.

According to a first embodiment, it is proposed a method wherein the suspending step being such that, during the suspension, the method further comprises the steps of:
- storing in a buffer a subset of data to be sent to the receiving unit,
- after resuming active connection, sending data from the buffer to the receiving unit.

The buffering of data, in particular for a data connection, is a step to assure that no data are lost during the suspension time. In particular in the M2M field for devices that continuously produce measuring data it is advantageous to conduct buffering of measured data during the suspension time. After resuming the active connection, the buffered data can be sent.

Typically such a buffer is permanently in use, that means it is constructed as a queue, where the process of providing data to the queue and of transmitting data out of the queue is decoupled. In such an embodiment it would not even be required to separately activate the buffer for the suspension step.

According to a second embodiment it is proposed a method wherein the suspending step being such that said connection is closed, the resuming step is such that connection with said receiving unit is set up by use of said previously selected subscription.

According to this embodiment the connection to the receiving unit is closed. The resuming step after sending the area update message therefore comprises setting up a new connection. For that new connection the subscription previously used for the first connection is used again. As the receiving unit has to combine both connections, it is easier to do so, if the sending wireless communication device is the same and uses the same subscription. For that the receiving unit is preferably configured to accept the second connection request and able to combine the first connection with the new connection by means of an identification through the subscription associated to the wireless communication device.

Alternatively it is proposed a method wherein the suspending step being such that said connection is closed, the resuming step is such that connection with said receiving unit is set up by use of subscription which was activated for last sending of the area update message.

This alternative derives from the previously discussed embodiment by the fact that the subscription which was active when the area update message was sent is now used for setting up a second connection to the receiving unit. This embodiment saves one activation step for switching the active subscriptions and therefore could reduce the time until the connection is resumed. As the receiving unit now receives a connection request from a wireless communication device identified by means of a different subscription and using a different wireless network, it requires additional effort to allow the receiving unit to identify that with this connection request a previously suspended connection shall be resumed. For that it is advantageous to use a session identifier, which is provided within the payload of the active connection to the receiving unit. Such session identifier can in particular be held by means of the protocol stack state interface. With that session identifier the receiving unit is able to detect the link between both connections.

In a third embodiment it is proposed a method wherein said active connection being configured to allow time periods where no communication data are sent to the receiving unit, said suspending step uses such time periods to interrupt sending of communication data to the receiving unit.

In comparison to the previous embodiment in this case the connection is not closed. This is particularly feasible for packet based connection, where a connection context is set up and the actual sending of packets is less time critical as long as the context is alive. It is therefore possible to intervene between the sending of two packets and switch to another subscription for sending an area update message. After the previous subscription is activated again, the connection can be continued simply by sending the next data packet. This embodiment is particularly designed for IP connections.

In case the wireless communication device would only perform a switch of subscription based on service quality basis, it is alternatively possible to put the emphasis on the currently running connection, and not suspend the connection for area update messages. That would mean that the registrations of the subscriptions different from the active subscription will be lost, and after the end of the connection the registration steps have to be repeated. This is for the described use case feasible as currently the active subscription obviously provides an acceptable service and therefore there is no need to switch.

According to a second aspect of the invention it is proposed a wireless communication device configured to operate in more than one wireless networks, comprising a transceiver and a protocol stack connectively associated to the transceiver, at least two storage elements, each associated to a distinct subscription to wireless networks, the transceiver and the protocol stack being shared by the storage elements, a control unit being configured to control activity of wireless communication device,
the control unit is configured to
- register with each subscription in the associated wireless network,
- during registration gather synchronization data relative to area update,
- maintain a timer defined from the synchronization data for each associated subscription,
- after one of the timers expires execute the steps:
- activate the subscription associated to the expired timer,
- send area update message to the wireless network associated to the activated subscription in respect to the synchronization data.

The wireless communication device of the second aspect of the present invention shares the advantages achieved with the operating method of the first aspect of the invention.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 represents a wireless communication device of the type to which the present invention is applied as an embodiment in a communication environment;
- Figure 2 shows a flowchart of a particular form of an embodiment ;
- Figure 3 shows a timeline diagram showing first basic time triggered activation procedure; and
- Figure 4 shows a timeline diagram showing first suspend procedure of the wireless communication device during communication; and
- Figure 5 shows another timeline diagram showing second suspend procedure of the wireless communication device during communication.
- Figure 6 shows another timeline diagram showing third suspend procedure of the wireless communication device during communication.
- Figure 7 shows another timeline diagram showing activation switch procedure of the wireless communication device.

### DETAILED DESCRIPTION OF EMBODIMENTS OF THE INVENTION

The same elements have been designated with similar reference numerals in the different drawings. For clarity, only those elements and steps which are useful to the understanding of the present invention have been shown in the drawings and will be described. Moreover, when an action is said to be performed by a device, it is in fact executed by a microprocessor in this device controlled by instruction codes recorded in a program memory on the said device.

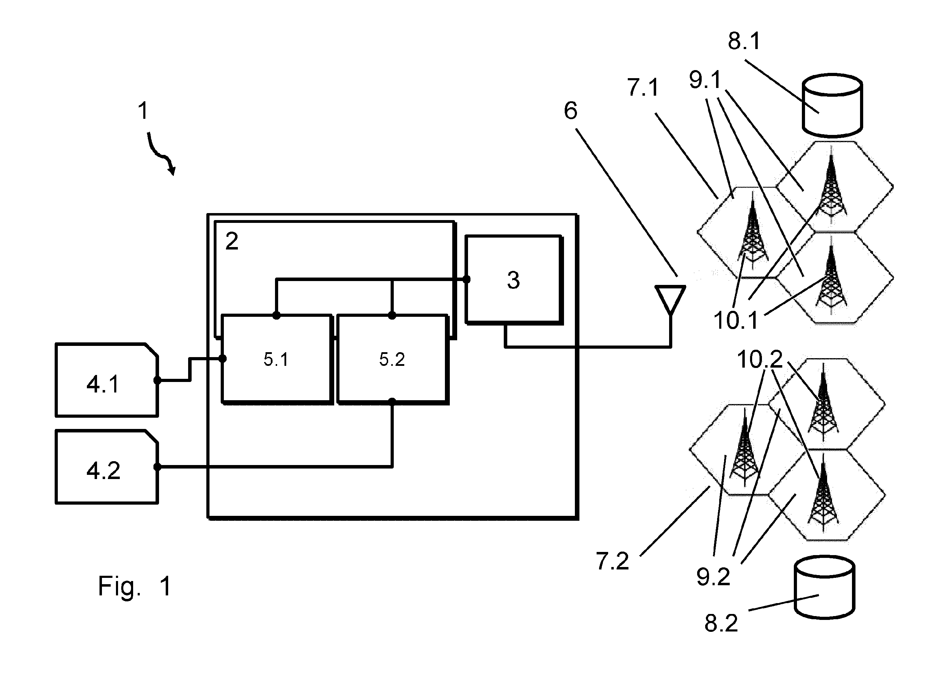

FIG. 1 schematically shows a wireless communication device 1 of the type to which the present invention is applied as an embodiment. The wireless communication device 1 can be any type of electronic device which comprises communication means, in particular a mobile handset or smartphone, or a machine-to-machine device like an ATM, a Point-of-Sale (POS) device or even a communication unit built in a car. Such wireless communication device 1 can be composed of a device appliance portion and a communication module. The wireless communication device 1 is configured to be operated within at least two wireless networks 7.1, 7.2. Such wireless networks are in particular cellular networks, like those supporting wireless technology standards defined within 3GPP as GSM, EDGE, UMTS, LTE, or two or more of them. Additionally the wireless communication device 1 is configured to operate within said wireless networks supporting said wireless technology standards. Hence each cellular wireless network is composed of two or more cells 9.1, 9.2. Each of the cells 9.1, 9.2 has assigned a network node 10.1, 10.2, like a base station, nodeB or eNodeB.

The wireless communication device 1 comprises a protocol stack 2 and an RF (radio frequency) unit 3. Typically, the protocol stack 2 is a software portion running on a processing unit within the wireless communication device 1. It is configured to control the RF unit 3 and is able to decode received transmission from the wireless network 7.1, 7.2 and to code outgoing transmission to the wireless network 7.1, 7.2. At a time the protocol stack 2 can address one wireless network, hereinafter 7.1. This means all interaction of the wireless communication device 1 with the wireless network 7.1 is handled through the protocol stack 2.

For this purpose the protocol stack 2 locally stores status information according to the currently addressed wireless network 7.1. This is preferably done with the one of a plurality of protocol stack state interfaces 5.1, 5.2, which is assigned to the currently addressed wireless network 7.1.

It is arbitrary if the protocol stack state interface 5.1, 5.2 provides permanent or volatile memory to store the required information. Each protocol stack state interface 5.1, 5.2 receives subscription information, which is those data used to successfully register to an associated wireless network, from one out of the available at least two storage elements 4.1, 4.2.

Those storage elements can in particular be SIM cards (Subscriber Identity Module), UICCs (Universal Integrated Circuit Card), MIMs (Machine Identity Module) etc. Also those embodiments are included wherein one physical unit can at least comprise two storage elements. This is particularly true for an UICC which is capable of comprising more than one subscription identity. The subscription information stored in the storage elements 4.1, 4.2 correspond to subscription information stored within the wireless networks 7.1, 7.2 within subscription database 8.1, 8.2. This database is typically implemented as Home Location Register (HLR). Alternatively the subscription information can also be stored in a Visitors Location Register (VLR) for the case that the wireless communication device 1 does not register to its home network but to a visitor network, in particular in another country.

The wireless network 1 further comprises an antenna 6 which is connected to the RF unit 3. This antenna is configured to physically create the link to one of the addressed wireless networks 7.1, 7.2, to be exact to the cellular nodes 10.1, 10.2 of the respective cells 9.1, 9.2 within the wireless network 7.1, 7.2. The shown antenna 6 can also include architectures comprising more than one antenna, preferably according to the MIMO (Multiple Input Multiple Output) concepts, known in particular for the most recent wireless technology standards like LTE.

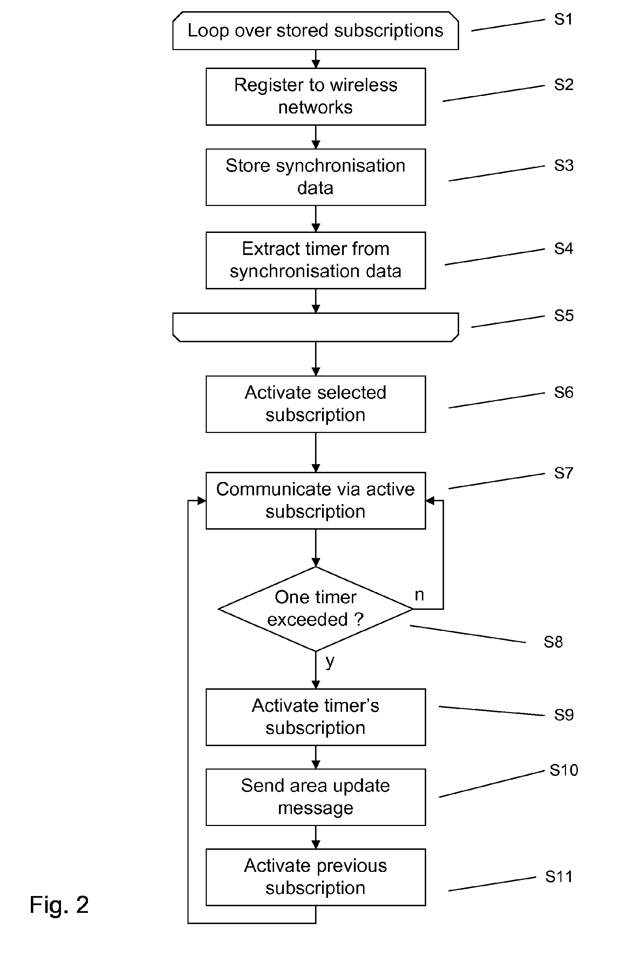

Fig. 2 describes the steps of operating the wireless communication device 1 according to the inventive method. It is the goal of the invention to allow the wireless communication device 1 to be registered at the same time in more than one wireless network 7.1, 7.2.

The first steps of the method are executed for each of the available networks. Available networks are those where an associated storage element 4.1, 4.2 is accessible for the wireless communication device 1. It is also possible to use only a subset of the available subscriptions. This is advantageous in case that at least one subscription is dedicated for a certain purpose, e.g. providing certain capabilities in the wireless network, but not as a fallback for the selected active subscription. For the rest of this example it is - without limiting the scope of the invention - assumed that all available subscriptions are used for the inventive method.

The method begins with step S1, which identifies the available subscription and executes the following steps until step S5 for each of the available subscriptions. It is arbitrary if for each subscription all steps are executed in a row, or if the switch between subscriptions is done for some or each step. First in step S2 the wireless communication device 1 registers to the wireless networks 7.1, 7.2 out of the set of available wireless networks. Step S3 comprises the subsequent step of the registration, wherein synchronization data for each of the wireless networks 7.1, 7.2 are determined, collected and stored. Preferably they are stored by means of the protocol stack state interface 5.1, 5.2 associated to the respective wireless network 7.1, 7.2.

Part of the synchronization data can be data received during registration step from the wireless network 7.1, 7.2. Part of the synchronization data can be data determined during registration, in particular data relative to physical means like values indicative of frequencies, channels, power. Part of the data can be data read from the associated storage element 4.1, 4.2.

During step S4 synchronization data are used to get additionally timer related information for area update messages. Those timer related information are specific to each wireless network 7.1, 7.2. The timer related information include at least the information relative to the frequency in which area update messages are expected from the wireless network, and information indicative of when the last time the current timer period was started.

With that timer related information it can be deducted at what time the wireless network latest expects an area update message in order to prevent the wireless network from unregistering the wireless communication device 1. Preferably that information is additionally stored by means of the protocol stack state interface 5.1, 5.2 associated to the respective wireless network 7.1,7.2.

The previous steps mainly cover the startup procedure of the wireless communication device 1.

In order to subsequently execute wireless communication tasks of the invention, it requires that one of the subscriptions, to which associated wireless network the wireless communication device 1 is registered, is selected as being active. In a step S6, a selected subscription is thus selected. According to the invention, active merely means that all incoming or outgoing communication is/will be handled over the active subscription. Meanwhile the other subscriptions where the wireless communication device 1 is registered remain without further activity. This ongoing procedure of communication is depicted in step S7.

In parallel to this procedure it is monitored in step S8 if one of the timers for area update messages is expired. It is arbitrary if this monitoring step is done via a lookup on a regular basis, a triggering event or on other methods. If no timer has expired, step S7 is continued without change.

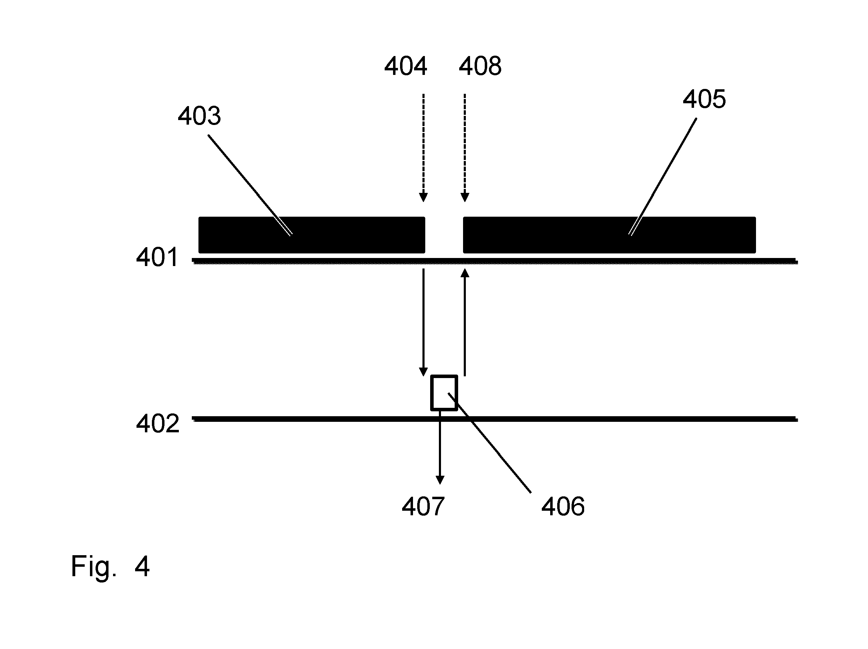

If it is detected in step S8 that one timer has expired, the communication via the active subscription is suspended according to one of the embodiments described with respect to Fig. 4-6.

A change in active subscription is necessary if the expired timer is associated to a subscription which is currently not active. Thus in a step S9, this subscription gets activated in response to the detection of the respective expired timer. Such activation is preferably done that way that the protocol stack 2 is instructed to switch from the previously used protocol stack state interface 5.1 to the protocol stack state interface 5.2 which is associated to said expired timer.

If the timer is associated to the already active subscription no further activation needs to be done within step S9.

In any case, a step S10 is executed, which is the sending of an area update message. This message sending is dependent upon the configuration of the wireless network 7.1, 7.2, or at least upon the wireless technology standards the wireless communication device 1 is currently operating in under the associated subscription. For 4G networks such area update message is usually expected for connected wireless communication devices, for 3G networks this is not the case.

The area update message is a message with that a wireless communication device 1 informs the wireless network 7.1, 7.2 about the cell, the location area or the tracking area where the wireless communication device 1 is currently operating in.

The wireless network 7.1, 7.2 needs to know this information in order to know to which subportions of the wireless networks and/or which cell dedicated messages, like a call, a short message or other messages are to be sent to. Through an area update message this required information is provided to the core network of the wireless network 7.1, 7.2. Depending on the technology of the respective wireless network such area update messages can be in particular an location area update (LAU), a tracking area update (TAU) or a routing area update (RAU).

Receiving such a message prevents the wireless network 7.1, 7.2 to cut the registration of the wireless communication device 1.

Future wireless technology standards may define further alternatives of update messages which are encompassed by this method. For the case that the wireless communication device 1 is capable of being registered to wireless networks 7.1, 7.2 of different wireless technology standards it is therefore recommended to store relative to the timer information the information relative to the type of area update message which is expected to be sent.

The area update message is sent during step S10.

When another subscription was active previously, it is additionally advantageous to execute a step S11, where the active subscription is changed back to the previously active subscription where the communication was active.

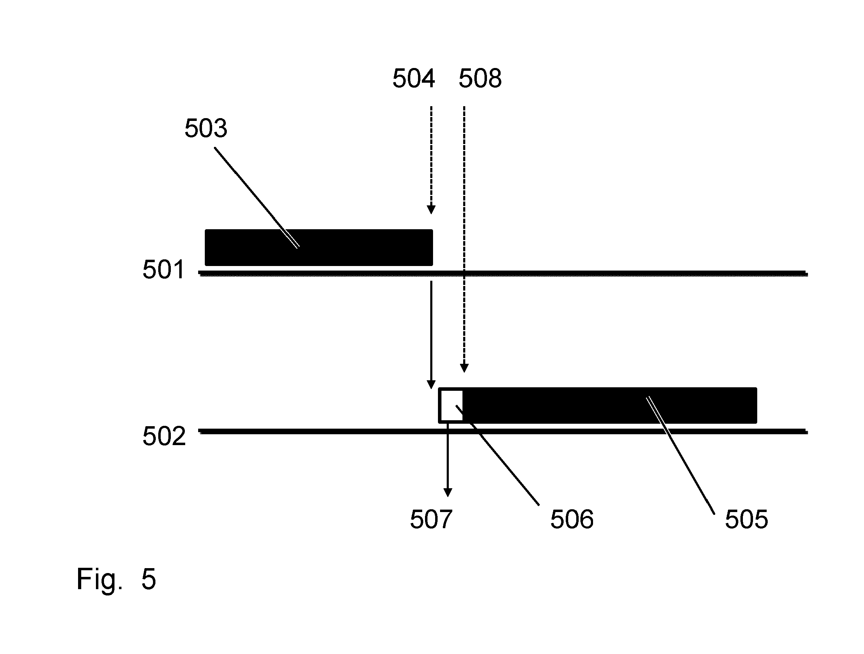

It is to be noted that this is an optional step as configurations might be advantageous where the amount of activation steps are expected to be as low as possible. An example where none return back is performed is later given in figure 5.

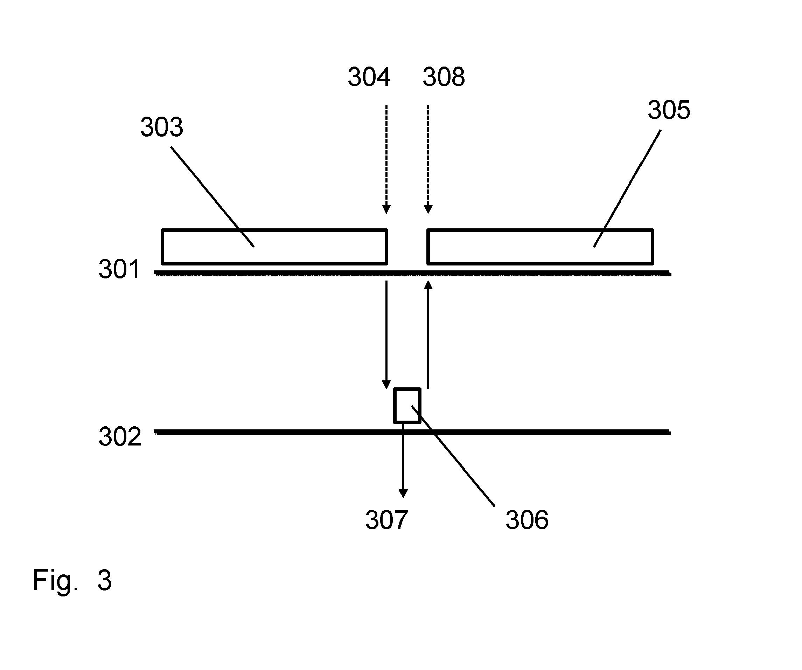

Fig. 3 shows in a timeline diagram the procedure which was described as according to Fig. 2. Here the lines 301 and 302 show timelines with respect to first and second subscription accessible for a wireless communication device 1. Timeline 301 is associated to the subscription associated to wireless network 7.1, timeline 302 is associated to the subscription associated to wireless network 7.2. For this example two subscriptions are selected out of simplicity purposes, the procedure would also work well with more than two subscriptions. The bars 303, 305, 306 depict those times where the subscriptions associated to the timelines 301, 302 are activated in the sense that during such time periods a communication with the wireless networks would be conducted with this subscription. At a time only one subscription can be activated.

According to that the displayed time segment 303 shows that currently the first subscription associated to timeline 301 is active. This phase lasts until the point in time 304 which complies with the expiring timer associated to the second subscription associated to timeline 302. The relevant information relative to the timer, in particular the time period between two area update messages and information relative to the time when the next area update message is expected, are retrieved from the respective wireless network (here: 7.2), preferably during the registration process. When this timer is expired the activation for the first subscription is ended and the second subscription is activated, which is shown with bar 306. It has to be noted that nevertheless the registration of the first subscription to the wireless network 7.1 is not cut by the activation of the second subscription, but is still maintained.

During this phase the area update message is sent to the wireless network 7.2 at the point in time 307. Dependent upon the configuration of the wireless network 7.2 a response upon the area update message can be received during bar 306; of course this is an optional step as long as such response is not expected to comprise information that are needed for the further procedure of the wireless communication device.

Therefore when the process of sending the area update message and potentially receiving the response is concluded, then, as marked by point in time 308, the activation changes back to the previously used first subscription, which is shown with bar 305. The whole process repeats once the timer associated to the second subscription expires again. If during the activation time period of bar 305 any communication is executed is arbitrary. Fig. 4 relates to the situation of an ongoing communication by using the currently active first subscription associated to timeline 401. Such communication could be an ongoing data upload or download with a receiving unit like a remote server. Bar 403 depicts the activation time of the first subscription. Here the bar is filled, indicating the ongoing communication. Now at the point in time 404 the timer associated to the second subscription which is associated to timeline 402 expires and therefore makes necessary to switch activations.

According to the solution depicted in Fig. 4, the communication is suspended prior to the change of activation. This suspension is preferably done with the help of a buffer where the data to be sent are stored at least for the time of the suspension. Then after activation of the second subscription the area update message is send at the point in time 407 to wireless network 7.2, depicted by bar 406. The point in time 407 is advantageously defined from synchronization data received during registration process. The activation then switches back to the first subscription at point in time 408. Now the suspended communication can be resumed, and continues with the first subscription, depicted with bar 405.

Alternatively the same situation can be handled with the way it is shown in Fig. 5. The reference numbers correlate to those in Fig. 3 and 4, whereby the leading numbers depict the figure number. The difference to the previously described procedure appears after the point in time 507 when the area update message is sent with the second subscription within bar 506. Then the activation of the first subscription is omitted, and the communication is resumed by means of the second subscription, shown in bar 505. This requires that the remote server is configured to accept those communication procedures. This could preferably be done by means of a session identifier stored relative to the data to be sent.

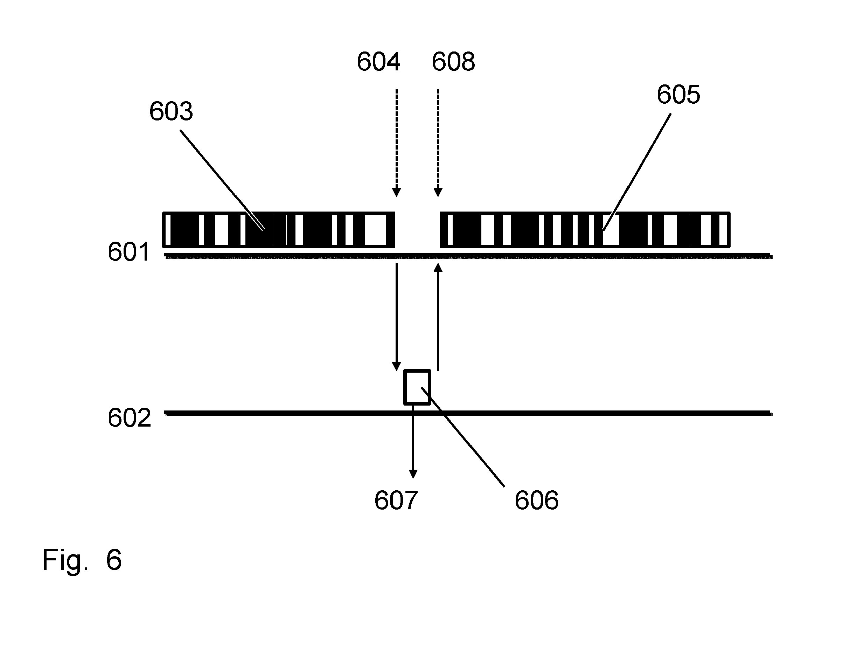

An alternative to the procedure described with respect to Fig. 4 is shown in Fig. 6. Here it is shown that the ongoing communication to the receiving unit by means of the first subscription associated to timeline 601 is packet based and not necessarily continuous. That means it is harmless for the communication link to the receiving unit, if there are times during that no data are sent. For the example of a GPRS based wireless network this means that a PDP context is setup to arrange a logical connection, while physically only a connection is there when actually data are sent. In the Always-On-Mode this logical connection can last for hours or more.

It is therefore allowed to switch the activation at point in time 604 without further measures with respect to the ongoing communication. The area update message for the second subscription is sent within bar 606 at the point in time 607. Then the activation switches back to the first subscription, the communication in bar 605 can continue without materially affecting the ongoing communication with a remote server.

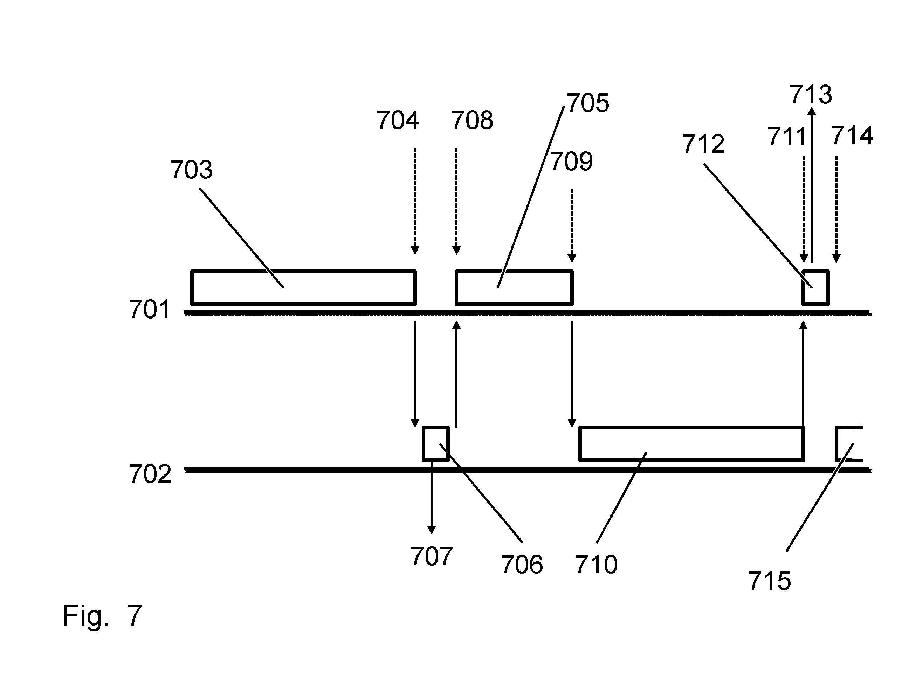

Fig. 7 shows another embodiment relative to the invention. It follows the situation depicted within Fig. 3. Here after the area update message at point in time 707, the first subscription is activated again, depicted in bar 705. Now at point in time 709 a command is received instructing the wireless communication device to switch the active subscription to the second subscription associated to the timeline 702.

Such command can be done through a manual interaction at the wireless communication device, or through an automatic method which is in particular triggered by a degradation of the service quality within the first subscription. Such degradation can even occur for wireless communication devices that are not materially moved, in particular through high traffic in the respective cell or a breathing cell, which means a cell which changes the size depending on the current traffic load, like it is typical for UMTS cells. Also in case of a manual interaction a service degradation can be the trigger to switch subscriptions.

Preferably it is shown on the user interface of such a wireless communication device the quality of the currently used wireless link, therefore the user can react before a communication link to a receiving unit is set up, or during a running communication link. Such wireless communication device is preferably equipped with an input unit, e.g. a button or a user interface based on a touchscreen, which allows switching the activation of the subscriptions. Irrespective of the service quality also capabilities of the different subscriptions can be the reason for such a switch, e.g. one subscription allows voice communication and the other allows a low-cost data service. When such switch command is received, the second subscription gets activated which is indicated by bar 710. Now the timer associated to the first subscription associated to timeline 701 needs to be monitored. It might expire in a different frequency than the previously monitored timer. If said timer associated to the first subscription expires, this again leads to a change of activation in point in time 711. There in bar 712 an area update message is sent with the first subscription to the associated wireless network 7.1 at point in time 713. After the switch back at point in time 714 the active subscription shown in bar 715 is continued, analogue to the procedure as described above.

Effectively, with the described method, the wireless communication device can provide with a far higher probability a stable wireless communication link to receiving units without remarkable delay should the currently active subscription be not capable to provide the requested service in the expected quality of service.

In the above detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the spirit and scope of the invention. In addition, it is to be understood that the location or arrangement of individual elements within each disclosed embodiment may be modified without departing from the spirit and scope of the invention. The above detailed description is, therefore, not to be taken in a limiting sense, and the scope of the present invention is defined only by the appended claims, appropriately interpreted, along with the full range of equivalents to which the claims are entitled.

## Claims

1. Method to operate a wireless communication device having a transceiver and a protocol stack connectively associated to the transceiver, at least two storage elements each associated to a distinct subscription to wireless networks, the transceiver and the protocol stack being shared by the storage elements, comprising the steps of:
- registering with each subscription in the associated wireless network,
- during registration gathering synchronization data relative to area update,
- maintaining a timer defined from the synchronization data for each associated subscription,
- after one of the timers expires executing the steps:
- activating the subscription associated to the expired timer,
- sending area update message to the wireless network associated to the activated subscription in respect to the synchronization data.

2. Method according to claim 1,
wherein the protocol stack is further configured to receive from a protocol stack state interface information relating to the associated subscription, comprising the step of:
- for each subscription, maintaining an associated protocol stack state interface,
- during registration with each subscription obtain information relating to the associated subscription from gathered synchronization data and store with protocol stack state interface,
- during the step of activating the subscription providing the protocol stack with said information relating to the associated subscription from the protocol stack state interface associated to the activated subscription.

3. Method according to one of the claims 1 or 2,
the method further comprising the steps of:
- selecting a first subscription associated to one of the storage elements for being used for a future connection through the protocol stack,
- activating the selected subscription,
- under request or in case of detection of service degradation of the wireless network associated to selected subscription, changing the subscription selection from the first subscription to a second subscription,
- activating said second subscription.

4. Method according to claim 1 to 3,
wherein the protocol stack operating by means of the transceiver in an active connection, set up by use of one selected subscription associated to one of the storage elements and set up with a receiving unit being accessible by means of the corresponding wireless network,
the method further comprises the steps of, after one timer associated to a subscription different from the selected subscription expires:
- suspending active connection to enable the activation of the subscription associated to the expired timer and the sending of the area update message;
- and, after the step of sending area update message, resuming active connection.

5. Method according to claim 4,
wherein the suspending step being such that, during the suspension, the method further comprises the steps of:
- storing in a buffer a subset of data to be sent to the receiving unit,
- after resuming active connection, sending data from the buffer to the receiving unit.

6. Method according to claim 4 to 5,
wherein the suspending step being such that said connection is closed,
the resuming step is such that connection with said receiving unit is set up by use of said previously selected subscription.

7. Method according to claim 4 to 5,
wherein the suspending step being such that said connection is closed, the resuming step is such that connection with said receiving unit is set up by use of subscription which was activated for last sending of the area update message.

8. Method according to claim 4 to 5,
wherein said active connection being configured to allow time periods where no communication data are sent to the receiving unit,
said suspending step uses such time periods to interrupt sending of communication data to the receiving unit.

9. Wireless communication device configured to operate in more than one wireless networks,
comprising a transceiver and a protocol stack connectively associated to the transceiver, at least two storage elements, each associated to a distinct subscription to wireless networks, the transceiver and the protocol stack being shared by the storage elements, a control unit being configured to control activity of wireless communication device,
the control unit is configured to
- register with each subscription in the associated wireless network,
- during registration gather synchronization data relative to area update,
- maintain a timer defined from the synchronization data for each associated subscription,
- after one of the timers expires execute the steps:
- activate the subscription associated to the expired timer,
- send area update message to the wireless network associated to the activated subscription in respect to the synchronization data.

10. Wireless communication device according to claim 9,
wherein the protocol stack is further configured to receive from a protocol stack state interface information relating to the associated subscription,
and the control unit is further configured:
- to maintain for each subscription an associated protocol stack state interface,
- when registering with each subscription obtaining information relating to the associated subscription from gathered synchronization data and store with protocol stack state interface,
- when activating the subscription: to provide the protocol stack with said information relating to the associated subscription from the protocol stack state interface associated to the activated subscription.

11. Wireless communication device according to one of the claims 9 or 10, the control unit is further configured
- to select a first subscription associated to one of the storage elements for being used for a future connection through the protocol stack,
- to activate the selected subscription
- on request or in case of detection of service degradation of the wireless network associated to selected subscription, change the subscription selection from the first subscription to a second subscription
- activate said second subscription.

12. Wireless communication device according to claim 9 to 11,
wherein the protocol stack is configured to operate by means of the transceiver in an active connection set up by use of one selected subscription associated to one of the storage elements and set up with a receiving unit being accessible by means of the corresponding wireless network,
and the control unit is configured to, after one timer associated to a subscription different from the selected subscription expires:
- suspend active connection to enable the activation of the subscription associated to the expired timer and the sending of the area update message;
- after the step of sending area update message, resume active connection.

13. Wireless communication device according to claim 12,
wherein the control unit is configured to, during the suspension,
store in a buffer a subset of data to be sent to the receiving unit,
after resuming the active connection, send data from the buffer to the receiving unit.

14. Wireless communication device according to claim 12 to 13,
wherein control unit is configured, as part of the suspension, to close said connection and as part of resuming set up connection with said receiving unit by use of said previously selected subscription.

15. Wireless communication device according to claim 12 to 13,
wherein the control unit is configured, as part of the suspension, to close said connection,
and as part of the resuming step, to set up connection with said receiving unit by use of subscription which was activated for last sending of area update message.

16. Wireless communication device according to claim 12 to 13,
wherein said active connection is configured to allow time periods where no communication data are sent to the receiving unit,
wherein control unit is configured to, as part of suspending step, use such time periods to interrupt sending of communication data to the receiving unit.
